# EUROPEAN PATENT SPECIFICATION

(11) **EP 3 229 439 B1**
(45) Date of publication and mention of the grant of the patent: **21.11.2018**
(21) Application number: 17164443.8
(22) Date of filing: 31.03.2017
(51) Int. Cl.: H04L 12/66, H04L 29/06

(54) **SECURE GATEWAY**
SICHERES GATEWAY
PASSERELLE SÉCURISÉE

(30) Priority: 04.04.2016 DE 102016106129; 21.04.2016 DE 102016107450
(43) Date of publication of application: 11.10.2017
(73) Proprietor: MB connect line GmbH Fernwartungssysteme, 91550 Dinkelsbühl (DE)
(72) Inventor: Müller, Siegfried, 91550 Dinkelsbühl (DE)
(74) Representative: Wittmann, Günther

(56) References cited:
- DE-A1-102012 021 540
- US-A- 5 661 786
- US-A1- 2012 030 768
- US-B2- 7 706 527
- Mb Connect Line Gmbh: "mbNET (Serie 800) mit serieller und MPI-Schnittstelle", , 22 March 2014 (2014-03-22), XP055378511, Retrieved from the Internet: URL:https://web.archive.org/web/2014032223 4518/http://www.mbconnectline.com:80/index .php/de/mbnet-mit-serieller-und-mpi-schnit tstelle/category/mbnet-mit-serieller-und-m piprofibus-schnittstelle [retrieved on 2017-06-02]

## Description

The present invention relates to a secure network gateway, particularly a gateway with which a manufacturing site may be connected to a wide area network, such as to the internet.

For monitoring manufacturing processes, it is required that the manufacturing equipment regularly transmits data to a predefined storage outside the manufacturing site. Such data is stored in the cloud, i.e. a protected memory, which may be accessed by the internet.

### Prior Art

It is to be understood that the manufacturing site must be protected against attacks from the internet. Prior art methods can only protect the connection, i.e. the physical link of the production site to the internet from unauthorized external access with a big effort. An unauthorized external access (attack) introduces the danger that data of the apparatus in the production site is amended and that the production process can be distorted thereby. Further, by wrong production data, workpiece and apparatus of the production site may be damaged.

The prior art proposes use of so-called data diodes as gateways for avoiding unauthorized external access to the production sites. Data diodes achieve inter alia the function of a so-called firewall. The data diodes of the prior art use software having a complex right management and use essentially application specific measures. Such software is intricate to administer. Further, the software of such gateway has to be updated regularly.

DE 10 2013 016 943 A1 discloses a cloud server for automation environments with a firewall. The security regime of the cloud server has to be secured by rules parameterized by software.

DE 10 2012 021 540 A1 discloses a box having a switch by which network connections can be switched on and switched off.

US 7,706,527 B2 discloses a device for interrupting a communication line. Two communication devices can be connected to the device at the downlink ports. One of the two devices can be disconnected from the uplink port by switches interrupting all communication lines to this device.

It is an object of the invention to provide an improved gateway.

### Summary of the Invention

The object of the invention is achieved by a gateway apparatus according to claim 1 and a production equipment according to claim 11. The depending claims are directed to preferred embodiments.

The inventive gateway apparatus is adapted to couple a first network with a second network. The first network may be a network of a production site. The second network may be a protected company network. The second network may be coupled to a wide area network such as the internet. The second network may comprise a so-called cloud storage accessible by the internet to store the data in the cloud storage or to read it therefrom.

The gateway apparatus further comprises a first network interface device coupled by a first interface to the first network and having a second interface. The first gateway device further comprises a second network interface device coupled by a first interface to the second network and having a second interface. The network apparatus further comprises a network coupling device adapted to transmit in a first state no data on the physical layer from the second interface of the second network interface device to the second interface of the first network interface device and adapted to transmit in a second state data from the second interface of the second network interface device to the second interface of the first network interface device. The network coupling device cannot or must not transmit any data in the first state on the circuit layer (physical layer) from the second network interface device to the first network interface device.

Said network coupling device includes a switching device coupled to a conductor coupling the second interface of the first network interface device and second network interface device. The switching device is connected such to the conductor that the conductor cannot transmit data in a first state of the switching device and that the conductor can transmit data in a second state of the switching device. Said switching device is controlled by a manual and/or mechanical switch operated by a user. The manual and/or mechanical switch may be directly coupled by at least one electric or optical conductor with the switching device.

Since the transmission of a data in the production site is blocked on the circuit layer and hardware layer, respectively the gateway apparatus is particularly secure, since no software is used that may be manipulated. Further, no errors may occur to false configuration of the firewall software or configuration software.

The layer 1 of the OSI reference model of the network coupling device may be adapted to transmit in the first state no data from the second network interface device to the first network interface device. The OSI reference model is known to the person skilled in the art. Layer 1 relates to the lowest transmission layer, such as the hardware layer and the bit transmission layer. If the hardware layer and the lowest bit transmission layer cannot transmit any data from the second network interface device to the first network interface device, a security software, firewall software or the like cannot be manipulated such that nevertheless data can be transmitted from the second network interface device to the first network interface device. Thereby, a secure gateway device is provided.

Alternatively or additionally, the second interface of the first network interface device may be adapted such that data may be only received, but that no data can be transmitted. The second interface of the first network interface device can only receive data in the first state from the network coupling device. By such measures, a redundancy for preventing of transmission of data from the second interface device to the first interface device is created.

The network coupling device may comprise a first conductor via which commands and/or data from the second network interface device is transmitted to the first interface device. A switching device may be arranged in the first conductor which causes in its open state the first state of the network coupling device, in which no data can be transmitted from the second interface device to the first interface device. The first conductor may be a command line and/or a data line. If such conductor is interrupted due to the open state of the switching device, no commands and/or no data can be transmitted on the physical layer and hardware layer, respectively from the first network interface device to the second network interface device. In its closed state the switching device causes the second state of the network coupling device, in which the data from the second network interface device can be transmitted to the first network interface device.

A switching device may comprise a mechanical switch or a remotely operated switch such a relay. The remotely operated switch may be controlled by a controller that is not part of the operation software of the gateway device. Thereby the security of the gateway device can be increased. For reasons of security, a mechanical switch is preferred, since it can only be operated by a person that has physical access to the gateway device. The switch can be secured by a lock.

In one embodiment the network coupling device may be a serial interface, a serial bus or a serial data transmission device. The serial data transmission has the advantage that the switching device needs only be arranged in one control conductor and/or one data conductor to interrupt such conductor.

In one embodiment the network coupling device may comprise a parallel interface, such as a parallel bus. In this embodiment the switching device may be arranged in a write control conductor, such as the write enabled conductor.

To the first interface of the first network interface device a plurality of network nodes may be connected. The first interface of the first network interface device may support PROFIBUS, PROFINET, Ethernet, an industrial Ethernet, CAN, EtherCAT and/or an arbitrary network protocol or bus protocol in a manufacturing environment.

A network may be connected to the first interface of the second network interface device, wherein the first interface of the second network interface device may support a LAN protocol, a WLAN protocol, a mobile radio protocol and/or an arbitrary WLAN protocol. The first interface of the second network interface device may be connected to the internet directly or by a network, such as a router. The first interface of the second network interface device may be connected with a so-called cloud storage for storage of data.

The first network device may comprise a field bus processor. The field bus processor may be arranged to convert busses connected to the first interface into a common format that is output and the second interface. The field bus processor may convert data structures and/or control information.

The gateway device may be configured to convert a protocol of a first interface of the first interface device into a protocol of the first interface of the second interface device. Optionally, the gateway device may be arranged to convert the protocol of the first interface of the second interface device to a protocol of the first interface of the first interface device. The network coupling device may use a common protocol.

The invention also relates to a manufacturing apparatus comprising the above gateway device. To the first interface of the first network interface device at least one production device may be connected. The manufacturing device may be a production control station, a control device, a memory programmable controller, a computer, a measuring device, an industrial control system, a data base for a production apparatus, a machine, a sensor or the like.

The first interface of the second interface device may be coupled with the internet.

### Brief Description of the Figures

The invention is now explained in further detail by an exemplary and nonlimiting embodiment under reference to the enclosed figures, wherein
Figure 1 is a schematic representation of the gateway device according to the present invention; and
Figure 2 is an exemplary embodiment of a serial interface embodying a network coupling device.

### Detailed Description of the Figures

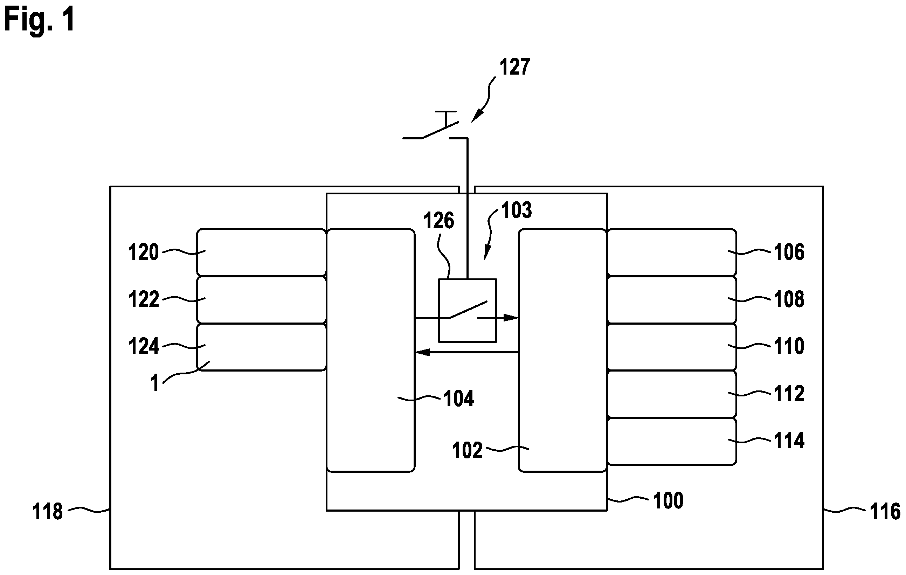

Figure 1 shows a gateway device 100 located at a transition from a production site 116 to an environment 118 with a wide area network. The gateway device 100 comprises a first interface device 102, a second interface device 104 and a network coupling device 103.

The first network interface device 102 comprises a first interface comprising a plurality of connections for network members located in the production environment 116. The first network device may comprise an interface for a PROFIBUS 106, an interface for a PROFINET 108, an interface for a Ethernet 110, an interface for an industrial Ethernet 110, and interface for a CAN bus 112 and/or an interface for an EtherCAT 114. It is to be understood that the first interface is configured such that an arbitrary field bus, an arbitrary network and particularly field buses under future developments, networks and the future development or the same may be connected to the first interface. The production environment may comprise a plurality of production devices connected to the first interface of the first network interface apparatus 102. The production device may be a data control station, a data base for a production apparatus, a machine, a sensor or the like. The second network interface device may comprise to an arbitrary wide area network, company network or the like. The wide area network may be the internet.

To the wide area network a so-called cloud storage may be connected in which data from the production environments 116 are stored. The second network interface device 104 may comprise an interface for a LAN 120, a WLAN 122, a mobile radio network 124 or an arbitrary other wide area network.

The first network interface device 102 and the second network interface 104 are coupled by a network coupling device 103. The Gateway device 100 is arranged to convert the protocol of an arbitrary interface at the first interface device 102 in an arbitrary protocol of a second interface device 104 and optionally vice versa. In the network coupling device 100 common protocols may be used.

The network coupling device is arranged such that it allows in the first state only a data transmission from the first network interface device 102 to the second network interface device 104. The circuit of the network coupling device is arranged such that in layer 1 merely data from the first network interface device 102 to the second network interface device 104 can be transmitted. In one embodiment the network coupling device 103 may be a serial bus, a serial network node and/or a serial interface. The circuit of the network coupling device 103 may be arranged such that the second network interface device 104 cannot transmit any commands for sending of data to the first network interface device 102. Further, the circuit of the network coupling device 103 can be arranged such that the second network interface device 104 cannot transmit any data bits to the first network interface device 102, if the network coupling device 103 is in its first state.

As is shown in figure 1 the network coupling device 103 may comprise a switching device 126 located in a conductor transmitting commands from the second network interface device 104 to the first network interface device 102. Alternatively or additionally, in the switching device 126 a conductor may be arranged transmitting data from the second network interface device 104 to the first network interface device 102. As long as the switching device 126 is open the network coupling device 103 is in its open state. No commands and no data can be transmitted from the second network interface device 104 to the first network interface device 102. Fig. 1 shows the first state during normal operation (production).

The switching device 126 may comprise a semiconductor switch, such as a transistor, MOS transistor, CMOS transistor, bipolar transistor or the like. The switching device 126 may comprise an optical coupler for coupling into the conductor. The switching device and semiconductor switch, respectively is controlled by the manual and/or mechanical switch 127. The manual and/or mechanical switch 127 can only be operated by a user that has physical access to the gateway device 100. The manual an/or mechanical switch 127 may be secured by a lock.

The manual and/or mechanical switch 127 may be connected by at least one wire directly with the switching device 126. Preferably, the manual and/or mechanical switch 127 and the switching device 126 may be located in the same housing. The housing may be the housing of the network coupling device 103 and/or the secure gateway 100.

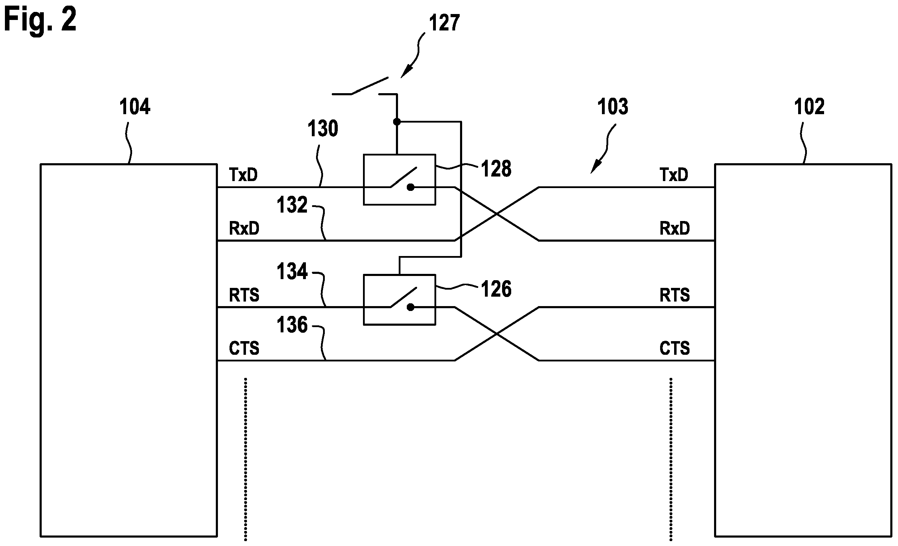

Reference is made to figure 2 showing an exemplary embodiment of the network coupling device 103, particularly a serial bus. The function and structure of a serial bus is known to the person skilled in the art. Consequently, only these elements of a serial bus are depicted necessary for understanding of the invention.

The network coupling device 103 transmits data from the first network interface device 102 to the second network device 104 over a second data conductor 132.

In the following the network coupling device 103 is described in a case, in which data is transmitted from the second network interface device 104 to the first network interface device 102. Data is transmitted from the second network interface device 104 to the first network interface device 102. Over the second conductor 132 data is transmitted from the first network interface device 102 to the second network interface device 104. If the second network interface device 104 shall transmit data to the first network interface 102, the second network interface device 104 indicates by a command on the third conductor 134 that data are to be transmitted from the second network interface device 104 to the first interface device 102. If the first network interface device 102 shall transmit data to the second network interface device 104 an indication is sent as a command on the fourth conductor 136.

In the embodiment of the network coupling device 103 shown in figure 2 data may be transmitted from the first network interface device 102 to the second network interface device 104, since the second conductor for transmitting data and the fourth conductor 136 for transmission of commands are connected from the first network interface device 102 without interruption to the second network interface device 104.

In the first conductor 130 an optional second switching device 128 is arranged. In this third conductor 134 a second switching device 126 is arranged. In the state shown in figure 2 the first switching device 126 and the second switching device 128 are opened. Accordingly, the second network interface device 104 cannot transmit commands to the first network interface device 102. Fig. 2 shows the first state during normal operation (production).

The switching device 126 may comprise a semiconductor switch, such as a transistor, MOS transistor, CMOS transistor, bipolar transistor or the like. The switching device 126, 128 may comprise an optical coupler for coupling into the conductor. The switching devices 126, 128 and semiconductor switches, respectively are controlled by the manual and/or mechanical switch 127. The mechanical switch 127 can only be operated by a user that has physical access to the gateway device 100. The mechanical switch 127 may be secured by a lock.

The manual and/or mechanical switch 127 may be connected by at least one wire directly with the switching devices 126, 128. Preferably, the manual and/or mechanical switch 127 and the switching devices 126, 128 may be located in the same housing. The housing may be the housing of the network coupling device 103 and/or the secure gateway 100.

As soon as the first switching device 126 and the second switching device 128 are closed by operating the manual (mechanical) switch 127, the second network interface device 104 can transmit data and commands to the first network interface device 102. This state is termed the second state. The second state may be desired by a setup operation, in which parts of the manufacturing environment 116, for example single machines, coupled with the first network coupling device are to be administered and/or configured.

The first switching device 126 and the second switching device 128 may be configured as a mechanical switch or an electromechanical switch, such as a relay. For reasons of security a mechanical switch is preferred, since it can only be

operated by persons having physical access to the gateway device. The switch may be secured by a lock.

The invention has been described with reference to a serial transmission in more detail. It is to be understood that the principles shown in the description of the figures may also be applied to a parallel interface. The switching device 126 may be arranged in such embodiment in a command conductor of the parallel interface.

The present invention provides an improved gateway device ensuring that data can be transmitted only unidirectional from the manufacturing environment 116 into a comparably open network environment. The data may be transmitted from the production environment 116 to a cloud storage, for example. The data in the cloud storage may be retrieved from other programs for administering. The invention ensures that no abusive commands can be transmitted to elements of the production environment 116, whereby the production environment may be distorted. Thereby, a protection of manufacturing environment 116 against third party attacks may be insured.

## Claims

1. Gateway device (100), adapted to couple a first network with a second network, comprising:
- a first network interface device (102) coupled by a first interface to the first network and having a second interface;
- a second network interface device (104) coupled by a first interface with the second network and having a second interface;
- a network coupling device (103) adapted to transmit in a first state no data from the second interface of the second network interface device (104) to the second interface of the first network interface device (102) on the physical layer and adapted to transmit in a second state data from the second interface of the second network interface device (104) to the second interface of the first network interface device (102), wherein the network coupling device (103) is adapted such that it allows in the first state only a data transmission from the first network interface device (102) to the second network interface device (104);
wherein said network coupling device (103) includes a switching device (126, 128) coupled to a conductor (130, 134) coupling the second interface of the first network interface device (102) and second interface of the second network interface device (104);
wherein the switching device (126, 128) is connected such to the conductor (130, 134) that the conductor cannot transmit data in a first state of the switching device and that the conductor can transmit data in a second state of the switching device and
wherein said switching device (126, 128) is controlled by a manual switch (127) operated by a user.

2. Gateway device (100) according to claim 1, **characterized in that** the layer 1 of the OSI reference model of the network coupling device (103) is configured to transmit in the first state no data from the second network interface device 104 to the first network interface device (102).

3. Gateway device (100) according to claim 1 or 2, **characterized in that** the second interface of the first network interface device (102) is adapted that it can only receive data but cannot transmit data.

4. Gateway device (100) according to any one of claims 1 to 3, **characterized in that** the network coupling device (103) comprises a first conductor (130, 134) via which commands and/or data are transmitted from the second network interface device (104) to the first network interface device (102), wherein in the first conductor a switching device (126, 128) is arranged, causing in its open state the first state of the network coupling device (103), in which no data from the second network interface device (104) can be transmitted to the first network interface device (102), and which causes in its closed state the second state of the first network coupling device (103), in which data from the second network interface device (104) can be transmitted to the first network interface device (102).

5. Gateway device (100) according to any one of claims 1 to 4, wherein the switching device comprises at least one of:
- a pull up device coupling the conductor to a positive supply voltage;
- a pull down device coupling the conductor to ground;
- a pull down device coupling the conductor to a negative supply voltage;
- a pull up device coupling the conductor to ground.

6. Gateway device (100) according to any one of claims 1 to 5, **characterized in that** the network coupling device (103) is a serial interface, a serial bus or a serial data transmission device.

7. Gateway device (100) according to any one of claims 1 to 6, **characterized in that** to the first interface of the first network interface device (102) a plurality of network members may be connected, wherein the first interface of the first network interface device (102) supports at least one of the following protocols:
- PROFIBUS;
- PROFINET;
- Ethernet;
- Industrial Ethernet
- CAN;
- EtherCAT.

8. Gateway device (100) according to any one of claims 1 to 7, **characterized in that** to the first interface of the second network interface device (104) at least one network may be connected, wherein the first interface of the second network interface device (104) supports at least one of the following protocols:
- LAN;
- WLAN
- a mobile radio protocol;
- a WLAN protocol.

9. Gateway device (100) according to one of claims 1 to 8, **characterized in that** the network interface device (102) comprises a field bus processor.

10. Gateway device (100) according to one of claims 1 to 9, **characterized in that** the gateway device (100) is configured to convert a protocol of a first interface of the first interface device (102) in a protocol of the first interface of the second interface device (104).

11. Manufacturing environment, comprising the gateway device (100) according to one of claims 1 to 10, wherein to the first interface of the first network interface device (102) at least one manufacturing device is connected.

12. Manufacturing environment according to claim 11, **characterized in that** the first interface of the second network interface device (104) is connected with the internet.

## Patentansprüche

1. Gatewayeinrichtung (100), die dazu ausgebildet ist, ein erstes Netzwerk mit einem zweiten Netzwerk zu koppeln, aufweisend:
- eine erste Netzwerkschnittstelleneinrichtung (102), die mittels einer ersten Schnittstelle mit dem ersten Netzwerk gekoppelt ist und eine zweite Schnittstelle aufweist;
- eine zweite Netzwerkschnittstelleneinrichtung (104), die mittels einer ersten Schnittstelle mit dem zweiten Netzwerk gekoppelt ist und eine zweite Schnittstelle aufweist;
- eine Netzwerkkoppeleinrichtung (103), die dazu ausgebildet ist, in einem ersten Zustand keine Daten von der zweiten Schnittstelle der zweiten Netzwerkschnittstelleneinrichtung (104) zu der zweiten Schnittstelle der ersten Netzwerkschnittstelleneinrichtung (102) auf einer physikalischen Schicht zu übertragen, und dazu ausgebildet ist, in einem zweiten Zustand Daten von der zweiten Schnittstelle der zweiten Netzwerkschnittstelleneinrichtung (104) zu der zweiten Schnittstelle der ersten Netzwerkschnittstelleneinrichtung (102) zu senden, wobei die Netzwerkkoppeleinrichtung (103) so ausgebildet ist, dass sie in dem ersten Zustand lediglich eine Datenübertragung von der ersten Netzwerkschnittstelleneinrichtung (102) zu der zweiten Netzwerkschnittstelleneinrichtung (104) zulässt;
wobei die Netzwerkkoppeleinrichtung (103) eine Schalteinrichtung (126, 128) aufweist, die mit einem Leiter (130, 134) gekoppelt ist, der die zweite Schnittstelle der ersten Netzwerkschnittstelleneinrichtung (102) und die zweite Schnittstelle der zweiten Netzwerkschnittstelleneinrichtung (104) koppelt;
wobei die Schalteinrichtung (126, 128) so mit dem Leiter (130, 134) verbunden ist, dass der Leiter keine Daten im ersten Zustand der Schalteinrichtung übertragen kann und dass der Leiter in einem zweiten Zustand der Schalteinrichtung Daten übertragen kann; und
wobei die Schalteinrichtung (126, 128) durch einen manuellen Schalter (127) gesteuert wird, der durch einen Nutzer bedient wird.

2. Gatewayeinrichtung (100) nach Anspruch 1, **dadurch gekennzeichnet, dass** die Schicht 1 des OSI-Referenzmodells der Netzwerkkoppeleinrichtung (103), dazu ausgebildet ist, im ersten Zustand keine Daten von der zweiten Netzwerkschnittstelleneinrichtung (104) zur ersten Netzwerkschnittstelleneinrichtung (104) zu übertragen.

3. Gatewayeinrichtung (100) nach Anspruch 1 oder 2, **dadurch gekennzeichnet, dass** die zweite Schnittstelle der ersten Netzwerkschnittstelleneinrichtung (102) dazu ausgebildet ist, dass sie lediglich Daten empfangen kann aber, keine Daten senden kann.

4. Gatewayeinrichtung (100) nach einem der Ansprüche 1 bis 3, **dadurch gekennzeichnet, dass** die Netzwerkkoppeleinrichtung (103) eine erste Leitung (130, 134) aufweist, mittels der Befehle und/oder Daten von der zweiten Netzwerkschnittstelleneinrichtung (104) zur ersten Netzwerkschnittstelleneinrichtung (102) übertragen werden, wobei in der ersten Leitung eine Schalteinrichtung (126, 128) angeordnet ist, die in ihrem geöffneten Zustand den ersten Zustand der ersten Netzwerkkoppeleinrichtung (103) bewirkt, bei dem keine Daten von der zweiten Netzwerkschnittstelleneinrichtung (102) an die erste Netzwerkschnittstelleneinrichtung (102) übertragen werden können, und die in ihrem geschlossenen Zustand den zweiten Zustand der ersten Netzwerkkoppeleinrichtung (103) bewirkt, bei dem Daten von der zweiten Netzwerkschnittstelleneinrichtung (104) an die erste Netzwerkschnittstelleneinrichtung (102) übertragen werden können.

5. Gatewayeinrichtung (100) nach einem der Ansprüche 1 bis 4, wobei die Schalteinrichtung zumindest eines von Folgenden aufweist:
- eine Pull-Up-Einrichtungen, die den Leiter mit einer positiven Versorgungspannung koppelt;
- eine Pull-Down-Einrichtung, die den Leiter mit Masse verbindet;
- eine Pull-Down-Einrichtung, die den Leiter mit einer negativen Versorgungsordnung koppelt;
- eine Pull-Up-Einrichtung, die den Leiter mit Masse koppelt.

6. Gatewayeinrichtung (100) nach einem der Ansprüche 1 bis 5, **dadurch gekennzeichnet, dass** die Netzwerkkoppeleinrichtung (103) eine serielle Schnittstelle, ein serieller Bus oder eine serielle Datenübertragungseinrichtung ist.

7. Gatewayeinrichtung (100) nach einem der Ansprüche 1 bis 6, **dadurch gekennzeichnet, dass** an die erste Schnittstelle der ersten Netzwerkschnittstelleneinrichtung (102) eine Mehrzahl Netzwerteilnehmer angeschlossen werden können, wobei die erste Schnittstelle der ersten Netzwerkschnittstelleneinrichtung (102) zumindest eines der folgenden Protokolle unterstützt:
- Profibus;
- Profinet;
- Ethernet;
- Industrielles Ethernet;
- CAN;
- EtherCat.

8. Gatewayeinrichtung (100) nach einem der Ansprüche 1 bis 7, **dadurch gekennzeichnet, dass** an die erste Schnittstelle der zweiten Netzwerkschnittstelleneinrichtung (104) zumindest ein Netzwerk angeschlossen werden kann, wobei die erste Schnittstelle der zweiten Netzwerkschnittstelleneinrichtung (104) zumindest eines der folgenden Protokolle unterstützt:
- LAN;
- WLAN;
- ein Mobilfunkprotokoll;
- ein WAN-Protokoll.

9. Gatewayeinrichtung (100) nach einem der Ansprüche 1 bis 8, **dadurch gekennzeichnet, dass** die Netzwerkschnittstelleneinrichtung (102) einen Feldbusprozessor aufweist.

10. Gatewayeinrichtung (100) nach einem der Ansprüche 1 bis 9, **dadurch gekennzeichnet, dass** die Gatewayeinrichtung (100) dazu ausgebildet ist, ein Protokoll einer ersten Schnittstelle der ersten Schnittstelleneinrichtung (102) in ein Protokoll der ersten Schnittstelle der zweiten Schnittstelleneinrichtung (104) umzusetzen.

11. Produktionsumgebung, aufweisend die Gatewayeinrichtung (100) nach einem der Ansprüche 1 bis 10, wobei an die erste Schnittstelle der ersten Netzwerkschnittstelleneinrichtung (102) zumindest eine Produktionseinrichtung angeschlossen ist.

12. Produktionsumgebung nach Anspruch 11, **dadurch gekennzeichnet, dass** die erste Schnittstelle der zweiten Netzwerkschnittstelleneinrichtung (102) mit dem Internet gekoppelt ist.

## Revendications

1. Dispositif de passerelle (100), adapté de manière à ce qu'il couple un premier réseau à un second réseau, comprenant :
- un dispositif d'interface de premier réseau (102) qui est couplé au moyen d'une première interface au premier réseau et qui comporte une seconde interface ;
- un dispositif d'interface de second réseau (104) qui est couplé au moyen d'une première interface au second réseau et qui comporte une seconde interface ;
- un dispositif de couplage de réseau (103) qui est adapté de manière à ce qu'il ne transmette, dans un premier état, aucunes données depuis la seconde interface du dispositif d'interface de second réseau (104) jusqu'à la seconde interface du dispositif d'interface de premier réseau (102) sur la couche physique et qui est adapté de manière à ce qu'il transmette, dans un second état, des données depuis la seconde interface du dispositif d'interface de second réseau (104) jusqu'à la seconde interface du dispositif d'interface de premier réseau (102), dans lequel le dispositif de couplage de réseau (103) est adapté de telle sorte qu'il permette, dans le premier état, seulement une transmission de données depuis le dispositif d'interface de premier réseau (102) jusqu'au dispositif d'interface de second réseau (104) ; dans lequel :
ledit dispositif de couplage de réseau (103) inclut un dispositif de commutation (126, 128) qui est couplé à un conducteur (130, 134) qui couple la seconde interface du dispositif d'interface de premier réseau (102) et la seconde interface du dispositif d'interface de second réseau (104) ; dans lequel :
le dispositif de commutation (126, 128) est connecté au conducteur (130, 134) de telle sorte que le conducteur ne puisse pas transmettre des données dans un premier état du dispositif de commutation et de telle sorte que le conducteur puisse transmettre des données dans un second état du dispositif de commutation ; et dans lequel :
ledit dispositif de commutation (126, 128) est commandé au moyen d'un commutateur manuel (127) qui est actionné par un utilisateur.

2. Dispositif de passerelle (100) selon la revendication 1, **caractérisé en ce que** la couche 1 du modèle de référence OSI du dispositif de couplage de réseau (103) est configurée de manière à ce qu'elle ne transmette, dans le premier état, aucunes données depuis le dispositif d'interface de second réseau (104) jusqu'au dispositif d'interface de premier réseau (102).

3. Dispositif de passerelle (100) selon la revendication 1 ou 2, **caractérisé en ce que** la seconde interface du dispositif d'interface de premier réseau (102) est adaptée de telle sorte qu'elle puisse seulement recevoir des données mais qu'elle ne puisse pas émettre/transmettre des données.

4. Dispositif de passerelle (100) selon l'une quelconque des revendications 1 à 3, **caractérisé en ce que** le dispositif de couplage de réseau (103) comprend un premier conducteur (130, 134) via lequel des commandes et/ou des données sont transmises depuis le dispositif d'interface de second réseau (104) jusqu'au dispositif d'interface de premier réseau (102), dans lequel, dans le premier conducteur, un dispositif de commutation (126, 128) est agencé, lequel force, dans son état ouvert, le premier état du dispositif de couplage de réseau (103), dans lequel aucunes données en provenance du dispositif d'interface de second réseau (104) ne peuvent être transmises jusqu'au dispositif d'interface de premier réseau (102), et lequel force, dans son état fermé, le second état du dispositif de couplage de premier réseau (103), dans lequel des données en provenance du dispositif d'interface de second réseau (104) peuvent être transmises jusqu'au dispositif d'interface de premier réseau (102).

5. Dispositif de passerelle (100) selon l'une quelconque des revendications 1 à 4, dans lequel le dispositif de commutation comprend au moins un dispositif pris parmi :
- un dispositif de montée de tension qui couple le conducteur à une tension d'alimentation positive ;
- un dispositif de baisse de tension qui couple le conducteur à une masse ;
- un dispositif de baisse de tension qui couple le conducteur à une tension d'alimentation négative ; et
- un dispositif de montée de tension qui couple le conducteur à une masse.

6. Dispositif de passerelle (100) selon l'une quelconque des revendications 1 à 5, **caractérisé en ce que** le dispositif de couplage de réseau (103) est une interface série, un bus série ou un dispositif de d'émission/de transmission de données série.

7. Dispositif de passerelle (100) selon l'une quelconque des revendications 1 à 6, **caractérisé en ce que**, sur la première interface du dispositif d'interface de premier réseau (102), les éléments d'une pluralité d'éléments de réseau peuvent être connectés, dans lequel la première interface du dispositif d'interface de premier réseau (102) supporte au moins l'un des protocoles qui suivent :
- PROFIBUS ;
- PROFINET ;
- Ethernet ; et
- Ethernet industriel.

8. Dispositif de passerelle (100) selon l'une quelconque des revendications 1 à 7, **caractérisé en ce que**, sur la première interface du dispositif d'interface de second réseau (104), au moins un réseau peut être connecté, dans lequel la première interface du dispositif d'interface de second réseau (104) supporte au moins l'un des protocoles qui suivent :
- LAN ;
- WLAN ;
- un protocole radio mobile ; et
- un protocole WLAN.

9. Dispositif de passerelle (100) selon l'une quelconque des revendications 1 à 8, **caractérisé en ce que** le dispositif d'interface de premier réseau (102) comprend un processeur bus de terrain.

10. Dispositif de passerelle (100) selon l'une quelconque des revendications 1 à 9, **caractérisé en ce que** le dispositif de passerelle (100) est configuré de manière à ce qu'il convertisse un protocole d'une première interface du dispositif d'interface de premier réseau (102) selon un protocole de la première interface du dispositif d'interface de second réseau (104).

11. Environnement de fabrication, comprenant le dispositif de passerelle (100) selon l'une quelconque des revendications 1 à 10, dans lequel, sur la première interface du dispositif d'interface de premier réseau (102), au moins un dispositif de fabrication est connecté.

12. Environnement de fabrication selon la revendication 11, **caractérisé en ce que** la première interface du dispositif d'interface de second réseau (104) est connectée à l'Internet.
